# EUROPÄISCHE PATENTSCHRIFT

(11) **EP 3 386 832 B1**
(45) Veröffentlichungstag und Bekanntmachung des Hinweises auf die Patenterteilung: **10.03.2021**
(21) Anmeldenummer: 17702833.9
(22) Anmeldetag: 30.01.2017
(51) Int. Cl.: B61D 17/20, B60D 1/62, B61G 5/10, B61D 17/22

(54) **FAHRZEUG, INSBESONDERE SCHIENENFAHRZEUG**
VEHICLE, IN PARTICULAR RAIL VEHICLE
VÉHICULE, EN PARTICULIER VÉHICULE FERROVIAIRE

(30) Priorität: 01.02.2016 DE 102016201437
(43) Veröffentlichungstag der Anmeldung: 17.10.2018
(73) Patentinhaber: Siemens Mobility GmbH, 81739 München (DE)
(72) Erfinder: BRÜGGEN, Andreas, 40822 Mettmann (DE); DREWS, Michael, 40589 Düsseldorf (DE); RESCHAT, Thomas, 50676 Köln (DE)
(86) Internationale Anmeldenummer: PCT/EP2017/051878
(87) Internationale Veröffentlichungsnummer: WO 2017/133993

(56) Entgegenhaltungen:
- EP-A1- 1 043 207
- EP-A1- 2 233 327
- WO-A1-01/68433
- DE-A1- 19 614 427
- DE-A1-102010 011 903
- DE-C1- 19 621 913
- DE-C1- 19 714 543

## Beschreibung

Die Erfindung bezieht sich auf Fahrzeuge, insbesondere Schienenfahrzeuge, die zumindest zwei miteinander verkoppelte Wagenkästen aufweisen, wobei zumindest eine Leitung einen Spalt zwischen den Wagenkästen überbrückt.

Da sich während des Fahrbetriebs des Fahrzeugs eine Relativbewegung zwischen den Wagenkästen nicht vermeiden lässt, ist es vorteilhaft, die Leitung zwischen den Wagenkästen flexibel oder zumindest geringfügig flexibel auszugestalten.

Das Dokument DE 10 2010 011903 A1 beschreibt eine Halteeinrichtung für Leitungen, welche einer Verbindung von insbesondere elektrischen Komponenten über ein Schwenk bzw. Drehgelenk zwischen zwei Fahrzeugteilen eines Gelenkfahrzeugs dient. Leitungen werden mittels eines durch ein Flachstahlband gebildeten flexiblen Haltebands über einen Zwischenraum zwischen den zwei Fahrzeugteilen geführt. An dem Halteband sind voneinander beabstandete Befestigungsklammern angeordnet, welche mehrere Leitungsaufnahmen ausbilden, durch die Leitungen hindurchgeführt werden.

Das Dokument DE 196 14 427 A1 beschreibt ein Koppelverbinder zur Energieübertragung zwischen zwei Wagenkästen eines Schienenfahrzeugs. In dem Bereich benachbarter Wagenkastenenden sind Stützisolatoren angeordnet, welche mit einer jeweiligen Stromleiterschiene verbunden sind. Zwischen den Stützisolatoren ist eine Teleskopstange angeordnet, deren beidseitigen Endstücke über Gelenkstützen mit den Stützisolatoren verbunden sind, wobei die Endstücke an einem mittleren Abschnitt der Teleskopstange längsverschiebbar gehalten werden. Die elektrische Energieübertragung zwischen den Stromleiterschienen erfolgt mittels einer elektrischen Leitungsanordnung umfassend zwei konzentrisch zueinander angeordnete Wendeln aus einer jeweiligen Mehrzahl Windungen, welche die Teleskopstange umschließen.

Der Erfindung liegt die Aufgabe zugrunde, ein Fahrzeug anzugeben, bei dem - mit Blick auf die Leitung zwischen den Wagenkästen - ein zuverlässiger und verschleißarmer Betrieb des Fahrzeugs erreicht werden kann.

Diese Aufgabe wird erfindungsgemäß durch ein Fahrzeug mit den Merkmalen des unabhängigen Patentanspruchs gelöst. Vorteilhafte Ausgestaltungen des erfindungsgemäßen Fahrzeugs sind in abhängigen Patentansprüchen angegeben.

Danach ist vorgesehen, dass die Leitung, speziell eine elektrisch nach außen isolierte Hochspannungsleitung, flexibel ist und im Bereich des Spaltes zwischen den Wagenkästen zumindest abschnittsweise mittels einer Kabelführungseinrichtung geführt ist, die in einer Führungsebene flexibel und in einer dazu senkrechten Ebene weniger flexibel als in der Führungsebene ist. Die Kabelführungseinrichtung weist dabei eine Vielzahl mechanisch miteinander gekoppelter Führungselemente auf, welche in der Führungsebene relativ zueinander schwenkbar sind.

Ein wesentlicher Vorteil des erfindungsgemäßen Fahrzeugs ist darin zu sehen, dass die erfindungsgemäß vorgesehene Kabelführungseinrichtung ein gefährliches Durchhängen einer flexiblen Leitung im Spaltbereich zwischen den Wagenkästen verhindert, wodurch beispielsweise ein Einklemmen und eine Beschädigung der Leitung zwischen sich bewegenden Teilen vermieden werden kann.

Vorzugsweise ist die Kabelführungseinrichtung derart in dem Bereich des Spaltes zwischen den beiden Wagenkästen angeordnet, dass die Führungsebene der Kabelführungseinrichtung parallel zur Fahrzeugauflageebene, auf der das Fahrzeug steht oder fährt, angeordnet ist, insbesondere horizontal oder zumindest in einem Winkelbereich zwischen ± 10 Grad zur Horizontalen, wenn das Fahrzeug horizontal steht.

Benachbarte Führungselemente sind erfindungsgemäß jeweils mittels eines Schwenklagers verbunden, dessen Schwenkachse senkrecht zur Führungsebene und/oder vertikal, oder zumindest in einem Winkelbereich zwischen ± 10 Grad zur Vertikalen, angeordnet ist. Die Kabelführungseinrichtung ist in der Ebene senkrecht zur Führungsebene vorzugsweise verwindungssteif. Bei den mechanisch gekoppelten Führungselementen handelt es sich bevorzugt um Kettenglieder. Die Leitung wird dabei zwecks sicherer Führung beispielsweise durch die Kettenglieder hindurchgeführt oder zumindest von diesen gehalten.

Bei der Kabelführungseinrichtung handelt es sich beispielsweise um eine Energieführungskette, auch Energiekette, E-Kette oder Schleppkette genannt.

Die von der Kabelführungseinrichtung geführte elektrisch nach außen isolierte Hochspannungsleitung ist vorzugsweise derart ausgelegt, dass sie zum Führen von Fahrstrom mit einer Nennspannung von 3 kV oder 6 kV im Falle von Gleichspannung und/oder von Fahrstrom mit einer Nennspannung von 15 kV oder 25 kV im Falle von Wechselspannung geeignet ist.

Mit Blick auf die Anordnung der Leitung und der Kabelführungseinrichtung wird es als besonders vorteilhaft angesehen, wenn zwischen den Wagenkästen eine Wellenbalgeinrichtung angeordnet ist, die eine begehbare Verbindung zwischen den Wagenkästen nach außen abschirmt, die Wellenbalgeinrichtung einen radial äußeren Wellenbalg und einen radial inneren Wellenbalg aufweist und die Kabelführungseinrichtung zwischen dem inneren und dem äußeren Wellenbalg angeordnet ist. Bei dieser Ausgestaltung wird vermieden, dass die Leitung und die Kabelführungseinrichtung den Luftwiderstand erhöhen und äußeren Einflüssen ausgesetzt sind. Beispielsweise ist die Kabelführungseinrichtung in einem Zwischenraum im Dachbereich der Wagenkästen, d.h. zwischen dem jeweils oberen Teil des inneren und äußeren Wellenbalgs, angeordnet.

Vorzugsweise weist die Wellenbalgeinrichtung einen Stützrahmen auf, auf dem sich die Kabelführungseinrichtung, insbesondere ein mittlerer Teilabschnitt der Kabelführungseinrichtung, abstützt.

Der Stützrahmen weist vorzugsweise zumindest ein Gleit- und/oder Rollenelement auf, auf dem die Kabelführungseinrichtung, insbesondere der mittlere Teilabschnitt der Kabelführungseinrichtung, reibungsarm gleitet und/oder rollt.

Die Wellenbalgeinrichtung umfasst bevorzugt einen zu dem einen Wagenkasten gehörenden Balgabschnitt und einen zu dem anderen Wagenkasten gehörenden Balgabschnitt; der Stützrahmen ist vorzugsweise zwischen den beiden Balgabschnitten angeordnet.

Bei dem Fahrzeug kann es sich beispielsweise um einen Eisenbahnzug mit einer Mehrzahl an miteinander verkuppelten Einzelwaggons oder auch um einen Gliederzug handeln, bei dem die Wagenkästen Abschnitte des Gliederzuges bilden. Die Leitung verbindet vorzugsweise alle verkuppelten Einzelwagen bzw. alle Abschnitte des Gliederzuges miteinander.

Die Erfindung wird nachfolgend anhand von Ausführungsbeispielen näher erläutert; dabei zeigen beispielhaft
- Figur 1: ein Ausführungsbeispiel für ein erfindungsgemäßes Schienenfahrzeug, bei dem eine Leitung abschnittsweise in einer Kabelführungseinrichtung geführt wird,
- Figur 2: in einer Draufsicht einen Querschnitt durch das Schienenfahrzeug gemäß Figur 1,
- Figur 3: ein Ausführungsbeispiel für eine Kabelführungseinrichtung, die bei dem Schienenfahrzeug gemäß den Figuren 1 und 2 eingesetzt werden kann,
- Figur 4: ein weiteres Ausführungsbeispiel für ein erfindungsgemäßes Schienenfahrzeug, bei dem eine Leitung abschnittsweise in einer Kabelführungseinrichtung geführt wird, wobei die Kabelführungseinrichtung auf einem Stützrahmen abgestützt wird, und
- Figur 5: einen Querschnitt durch das Schienenfahrzeug gemäß Figur 4 in einer Draufsicht.

In den Figuren werden der Übersicht halber für identische oder vergleichbare Komponenten dieselben Bezugszeichen verwendet.

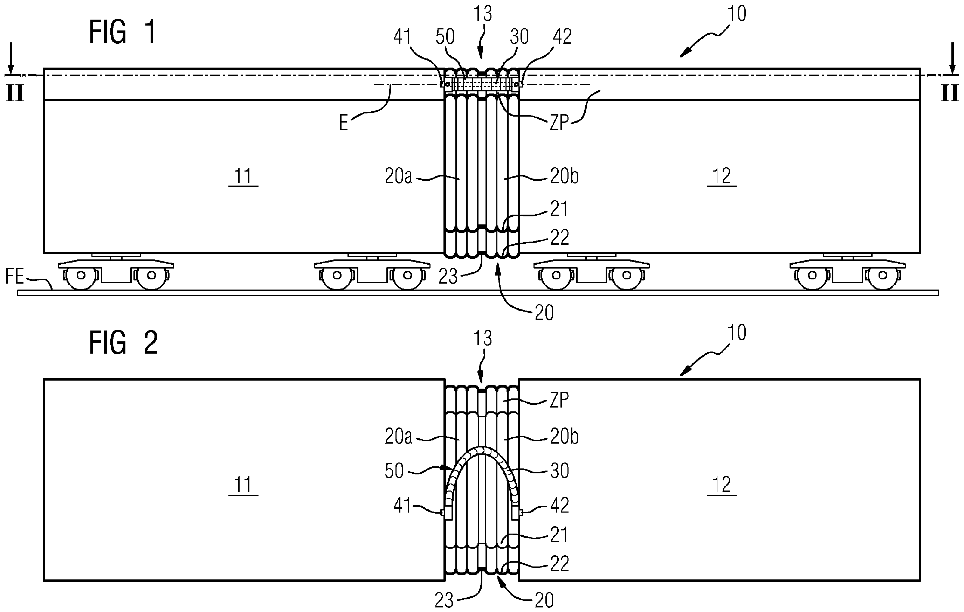

Die Figur 1 zeigt ein Ausführungsbeispiel für ein Schienenfahrzeug 10, das zwei oder mehr miteinander verkoppelte Wagenkästen aufweist. Die Wagenkästen können Abschnitte eines Gliederzuges bilden oder zu miteinander verkuppelten Einzelwagen gehören, wie dies beispielhaft in der Figur 1 gezeigt ist. In der Figur 1 sind zwei der Wagenkästen des Schienenfahrzeugs 10 näher dargestellt und dort mit den Bezugszeichen 11 und 12 gekennzeichnet.

Um Personen einen Übergang von dem Wagenkasten 11 in den Wagenkasten 12 und umgekehrt zu ermöglichen, ist ein Spalt 13 zwischen den beiden Wagenkästen 11 und 12 durch eine begehbare Verbindungseinrichtung überbrückt, die in der Figur 1 nicht näher dargestellt ist, weil sie von einer zwischen den beiden Wagenkästen 11 und 12 bzw. im Bereich des Spalts 13 angeordnete Wellenbalgeinrichtung 20 nach außen abgeschirmt wird. Die begehbare Verbindungseinrichtung zwischen den beiden Wagenkästen 11 und 12 kann beispielsweise durch ein Trittblech oder dergleichen gebildet sein.

Um ein Auftrennen des Schienenfahrzeugs 10 bzw. ein Trennen der Wagenkästen 11 und 12 voneinander zu ermöglichen, weist die Wellenbalgeinrichtung 20 vorzugsweise einen Balgabschnitt 20a, der zum Wagenkasten 11 gehört, sowie einen Balgabschnitt 20b auf, der zum Wagenkasten 12 gehört. Zwischen den beiden Balgabschnitten 20a und 20b kann ein Stützrahmen 23 vorgesehen sein.

Die Wellenbalgeinrichtung 20 - und damit jeder der beiden Balgabschnitte 20a und 20b - weist einen inneren Wellenbalg 21 auf, der außen von einem radial außen liegenden Wellenbalg 22 umhüllt wird. Da der äußere Wellenbalg 22 größer als der innere Wellenbalg 21 ist, wird zwischen dem äußeren Wellenbalg 22 und dem inneren Wellenbalg 21 ein Zwischenraum gebildet, der in der Figur 1 mit dem Bezugszeichen ZP gekennzeichnet ist.

Zur Verbindung der beiden Wagenkästen 11 und 12 ist eine Leitung 30 vorgesehen, die mit einem Leitungsende an ein Anschlusselement 41 des Wagenkastens 11 und mit einem anderen Leitungsende an ein Anschlusselement 42 des Wagenkastens 12 angeschlossen ist. Bei der Leitung 30 kann es sich prinzipiell beispielsweise um eine elektrische, optische, pneumatische oder hydraulische Leitung handeln. Vorteilhaft ist es, wenn es sich bei der Leitung 30 um eine Energieübertragungsleitung in Form einer elektrischen, nach außen isolierten Hochspannungsleitung handelt, die zum Führen von Fahrstrom für das Schienenfahrzeug 10 geeignet ist. Die Leitung 30 ist vorzugsweise derart ausgelegt, dass sie für einen Spannungsbereich von 3 und/oder 6 kV im Falle eines Gleichstroms bzw. von 15 kV und/oder 25 kV im Falle von Wechselspannung geeignet ist bzw. für diese Spannungen spannungsfest ist.

Im Falle einer elektrischen Leitung 30 handelt es sich bei den Anschlusselementen 41 und 42 vorzugsweise um elektrische Kontaktelemente, z. B. in Form von elektrischen Anschlussbuchsen oder elektrischen Anschlusssteckern.

Die Leitung 30 ist vorzugsweise in dem Zwischenraum ZP zwischen dem äußeren Wellenbalg 22 und dem inneren Wellenbalg 21 angeordnet; eine solche Anordnung hat den Vorteil, dass die Leitung 30 keinen zusätzlichen Luftwiderstand hervorrufen kann und außerdem vor äußeren Einflüssen geschützt ist.

Da im Fahrbetrieb des Schienenfahrzeugs 10 gewisse Relativbewegungen zwischen den Wagenkästen 11 und 12 auftreten können, ist die Leitung 30 vorzugsweise flexibel ausgeführt. Um ein Durchhängen der Leitung 30 vertikal nach unten sowie ein unerwünschtes Aufliegen der Leitung 30 auf dem inneren Wellenbalg 21 der Wellenbalgeinrichtung 20 zu verhindern, wird die Leitung 30 bei dem Ausführungsbeispiel gemäß Figur 1 im Bereich zwischen den Wagenkästen 11 und 12 zumindest abschnittsweise mit einer Kabelführungseinrichtung 50 geführt.

Die Kabelführungseinrichtung 50 ist in einer vorgegebenen Führungsebene flexibel und in einer dazu senkrechten Ebene weniger flexibel als in der Führungsebene, vorzugsweise verwindungssteif oder zumindest nahezu verwindungssteif. Die Führungsebene der Kabelführungseinrichtung 50 ist in der Figur 1 mit dem Bezugszeichen E gekennzeichnet.

Es lässt sich in der Figur 1 erkennen, dass die Kabelführungseinrichtung 50 derart angeordnet ist, dass deren Führungsebene E parallel oder zumindest näherungsweise parallel (± 10 Grad) zur Fahrebene FE angeordnet ist. Die Fahrebene FE wird bei dem Schienenfahrzeug 10 gemäß Figur 1 durch die Schienenoberkante bzw. die Schienenebene gebildet, auf der das Schienenfahrzeug 10 fährt. Mit anderen Worten ist die Führungsebene E also horizontal oder zumindest näherungsweise horizontal bzw. in einem Winkelbereich von ± 10 Grad zur Horizontalen angeordnet, wenn das Schienenfahrzeug 10 horizontal steht.

Die Kabelführungseinrichtung 50 ermöglicht eine relative Bewegung zwischen den beiden Wagenkästen 11 und 12 innerhalb der Führungsebene E und gewährleistet dabei gleichzeitig, dass die Leitung 30 nicht oder zumindest nicht substantiell durchhängt und vorzugsweise keinen Kontakt zum inneren Wellenbalg 21 haben kann.

Die Figur 2 zeigt die beiden Wagenkästen 11 und 12 in einer Draufsicht, und zwar in einer Querschnittsebene, die in der Figur 1 mit dem Bezugszeichen II-II gekennzeichnet ist. Die Schnittebene II-II liegt innerhalb des Zwischenraums ZP bzw. räumlich zwischen dem inneren Wellenbalg 21 und dem äußeren Wellenbalg 22 der Wellenbalgeinrichtung 20 gemäß Figur 1.

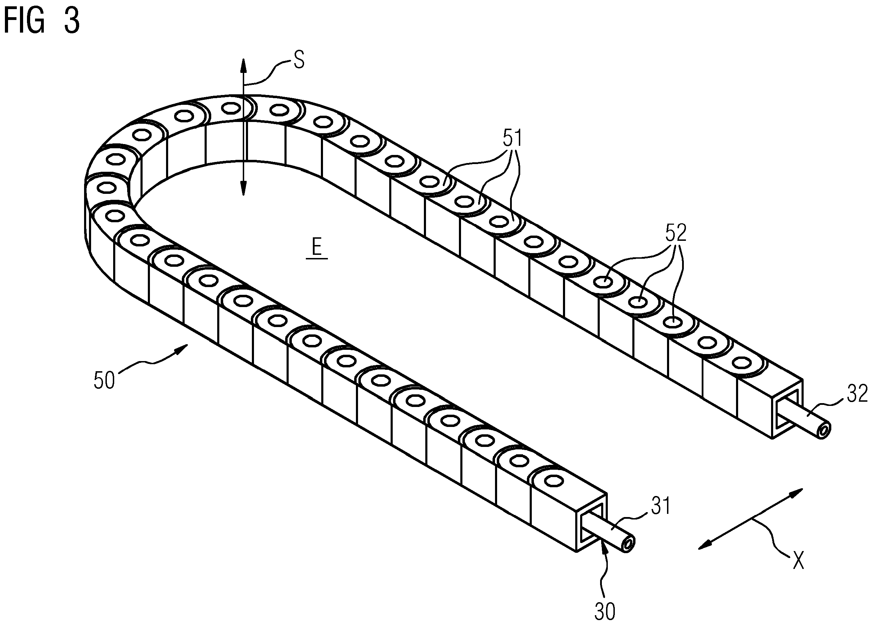

Es lässt sich erkennen, dass die Leitung 30 mit den beiden Anschlusselementen 41 und 42 der beiden Wagenkästen 11 und 12 in Verbindung steht sowie bogenförmig gekrümmt ist. Die bogenförmige Krümmung sowie die Flexibilität der Leitung 30 ermöglichen es, die Wagenkästen 11 und 12 aufeinander zu und voneinander weg zu bewegen (siehe auch Pfeilrichtung X in Figur 3), ohne die Verbindung zwischen der Leitung 30 und den Anschlusselementen 41 und 42 mechanisch signifikant zu belasten. Eine Relativbewegung zwischen den Wagenkästen 11 und 12 wird beispielsweise auftreten, wenn das Schienenfahrzeug 10 durch Kurven fährt.

Die Figur 3 zeigt die Leitung 30 gemäß den Figuren 1 und 2 sowie die Kabelführungseinrichtung 50 in einer dreidimensionalen Darstellung näher im Detail. Man erkennt die beiden Leitungsenden 31 und 32, die mit den zugeordneten Anschlusselementen 41 und 42 gemäß den Figuren 1 und 2 in Verbindung stehen.

Bei der Kabelführungseinrichtung 50 handelt es sich vorzugsweise um eine Energieführungskette, fachsprachlich auch Energiekette, E-Kette oder Schleppkette genannt. Die Kabelführungseinrichtung 50 weist eine Vielzahl an miteinander mechanisch gekoppelten Führungselementen in Form von Kettengliedern 51 auf, die in der Führungsebene E relativ zueinander schwenkbar sind.

Um die Verschwenkbarkeit der Kettenglieder 51 in der beschriebenen Weise zu ermöglichen, sind benachbarte Kettenglieder 51 vorzugsweise jeweils mittels eines Schwenklagers 52 verbunden, dessen Schwenkachse S senkrecht zur Führungsebene E angeordnet ist. Im Falle einer horizontalen Anordnung der Kabelführungseinrichtung 50, wie dies beispielhaft in den Figuren 1 und 2 der Fall ist, ist die Ausrichtung der Schwenkachse S der Schwenklager 52 also vertikal oder zumindest näherungsweise vertikal (± 10 Grad zur Vertikalen).

Da die Kettenführungseinrichtung 50 gemäß Figur 3 durch die schwenkbar miteinander verbundenen Kettenglieder 51 gebildet ist, ist die Kettenführungseinrichtung 50 in der Ebene senkrecht zur Führungsebene E verwindungssteif oder zumindest näherungsweise verwindungssteif. Eine Beweglichkeit innerhalb der Ebene E sowie Biegen der Leitung 30 im Bereich zwischen den Leitungsenden 31 und 32 entlang der Fahrzeuglängsrichtung X ist jedoch gewährleistet.

Um eine sichere bzw. zuverlässige Führung der Leitung 30 durch bzw. innerhalb der Kabelführungseinrichtung 50 zu ermöglichen, wird es als vorteilhaft angesehen, wenn die Leitung 30 durch die Kettenglieder 51 hindurchgeführt ist. Alternativ kann vorgesehen sein, dass die Leitung 30 lediglich von den Kettengliedern 51 gehalten wird; im Falle einer solchen Ausgestaltung ist es vorteilhaft, wenn die Kettenglieder 51 außenseitig Halteelemente aufweisen, die zum Halten der Leitung 30 dienen und verhindern, dass die Leitung 30 vertikal und in Richtung des inneren Wellenbalgs 21 gemäß Figur 1 durchhängen kann.

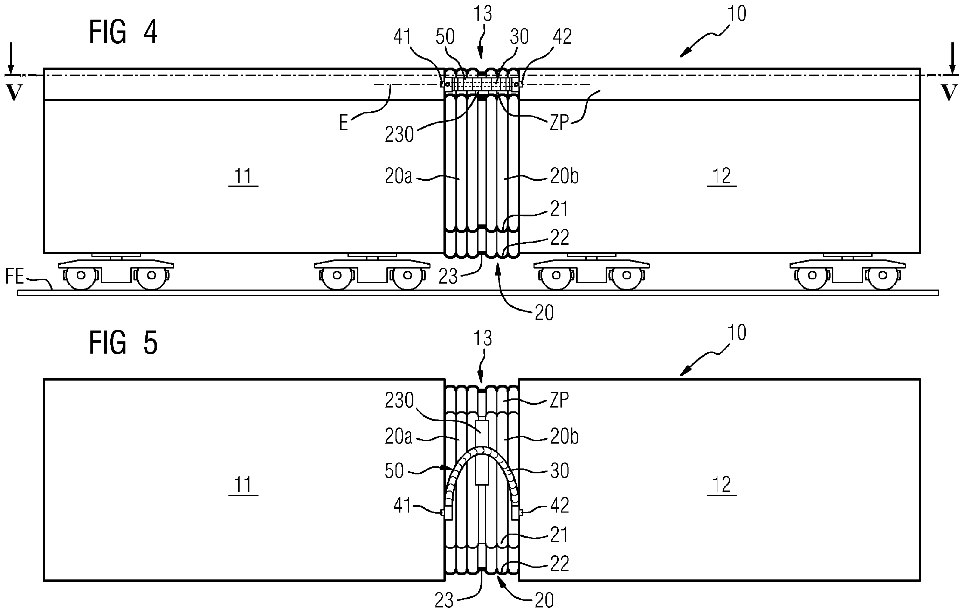

Im Zusammenhang mit den Figuren 4 und 5 wird nachfolgend ein weiteres Ausführungsbeispiel für ein Schienenfahrzeug 10 erläutert, bei dem eine Kabelführungseinrichtung 50 zur Führung einer Leitung 30 vorgesehen ist.

Bei dem Ausführungsbeispiel gemäß den Figuren 4 und 5 ist vorgesehen, dass sich die Kabelführungseinrichtung 50, insbesondere ein mittlerer Teilabschnitt der Kabelführungseinrichtung 50, auf einem Abschnitt des Stützrahmens 23 der Wellenbalgeinrichtung 20 abstützt. Ein solches Abstützen der Kabelführungseinrichtung 50 auf dem Stützrahmen stellt sicher, dass die Kabelführungseinrichtung 50 mit überwiegender Wahrscheinlichkeit nicht in Kontakt mit dem inneren Wellenbalg 21 kommen kann.

Mit Blick auf einen reibungsarmen Kontakt zwischen der Kabelführungseinrichtung 50 und dem Stützrahmen 23 ist letzterer vorzugsweise mit einem Gleit- und/oder Rollenelement 230 ausgestattet, auf dem die Kabelführungseinrichtung 50, insbesondere der mittlere Teilabschnitt der Kabelführungseinrichtung 50, reibungsarm gleiten und/oder rollen kann. Bei dem Gleit- und/oder Rollenelement 230 kann es sich beispielsweise um eine Gleitplatte, ein Gleitprofil oder auch um eine Stützrolle handeln, auf der die Kabelführungseinrichtung 50 aufliegt.

Die Figur 5 zeigt die Wellenbalgeinrichtung 20 sowie das Gleit- und/oder Rollenelement 230 des Stützrahmens 23 nochmals näher im Detail in einer Draufsicht in der Ebene V-V gemäß Figur 4. Es lässt sich erkennen, dass die Kabelführungseinrichtung 50 durch das Gleit- und/oder Rollenelement 230 gleitend und/oder rollend gestützt wird und ein Durchhängen der Kabelführungseinrichtung vertikal bzw. in Richtung des inneren Wellenbalgs 21 durch das Gleit- und/oder Rollenelement 230 vermieden wird.

Alternativ kann vorgesehen sein, dass die Kabelführungseinrichtung 50 unmittelbar auf dem Stützrahmen 23 aufliegt, falls dieser nicht mit einem Gleit- und/oder Rollenelement 230 ausgestattet ist. In einem solchen Fall wird sich eine gewisse Reibung zwischen der Kabelführungseinrichtung 50 und dem Stützrahmen 23 je nach Materialwahl nicht vermeiden lassen, so dass bei einer solchen Ausführungsform der Verschleiß geringfügig höher sein wird.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen im Rahmen der Ansprüche können vom Fachmann hieraus abgeleitet werden, ohne den Schutzumfang der Erfindung zu verlassen.

## Patentansprüche

1. Fahrzeug, insbesondere Schienenfahrzeug (10), mit zumindest zwei miteinander verkoppelten Wagenkästen (11, 12), wobei zumindest eine Leitung (30) einen Spalt (13) zwischen den Wagenkästen (11, 12) überbrückt,
wobei die Leitung (30) eine elektrisch nach außen isolierte Hochspannungsleitung ist, flexibel ist und im Bereich des Spaltes (13) zwischen den Wagenkästen (11, 12) zumindest abschnittsweise mittels einer Kabelführungseinrichtung (50) geführt ist, **dadurch gekennzeichnet, dass** die Kabelführungseinrichtung (50) eine Vielzahl mechanisch miteinander gekoppelter Führungselemente aufweist, die in einer Führungsebene (E) relativ zueinander schwenkbar sind, wobei benachbarte Führungselemente jeweils mittels eines Schwenklagers (52) verbunden sind, dessen Schwenkachse (S) senkrecht zur Führungsebene (E) und/oder vertikal, oder zumindest in einem Winkelbereich zwischen ± 10 Grad zur Vertikalen, angeordnet ist, und wobei die Kabelführungseinrichtung (50) in der Führungsebene (E) flexibel und in einer dazu senkrechten Ebene weniger flexibel als in der Führungsebene (E) ist.

2. Fahrzeug nach Anspruch 1,
**dadurch gekennzeichnet, dass**
die Kabelführungseinrichtung (50) derart in dem Bereich des Spaltes (13) zwischen den beiden Wagenkästen (11, 12) angeordnet ist, dass die Führungsebene (E) der Kabelführungseinrichtung (50) parallel zur Fahrzeugauflageebene (FE), auf der das Fahrzeug steht oder fährt, angeordnet ist, insbesondere horizontal oder zumindest in einem Winkelbereich zwischen ± 10 Grad zur Horizontalen.

3. Fahrzeug nach einem der vorstehenden Ansprüche,
**dadurch gekennzeichnet, dass**
die Kabelführungseinrichtung (50) in der Ebene senkrecht zur Führungsebene (E) verwindungssteif ist.

4. Fahrzeug nach einem der vorstehenden Ansprüche,
**dadurch gekennzeichnet, dass**
die mechanisch gekoppelten Führungselemente Kettenglieder (51) sind.

5. Fahrzeug nach Anspruch 4,
**dadurch gekennzeichnet, dass**
die Leitung (30) durch die Kettenglieder (51) hindurchgeführt ist oder zumindest von diesen gehalten wird.

6. Fahrzeug nach einem der vorstehenden Ansprüche,
**dadurch gekennzeichnet, dass**
die Leitung (30) zum Führen von Fahrstrom mit einer Nennspannung von 3 kV oder 6 kV Gleichspannung und/oder von Fahrstrom mit einer Nennspannung von 15 kV oder 25 kV Wechselspannung geeignet ist.

7. Fahrzeug nach einem der vorstehenden Ansprüche,
**dadurch gekennzeichnet, dass**
- zwischen den Wagenkästen (11, 12) eine Wellenbalgeinrichtung (20) angeordnet ist, die eine begehbare Verbindung zwischen den Wagenkästen (11, 12) nach außen abschirmt,
- die Wellenbalgeinrichtung (20) einen radial äußeren Wellenbalg (22) und einen radial inneren Wellenbalg (21) aufweist, und
- die Kabelführungseinrichtung (50) zwischen dem inneren und dem äußeren Wellenbalg (21, 22), insbesondere im Dachbereich der Wagenkästen (11, 12), angeordnet ist.

8. Fahrzeug nach dem vorstehenden Anspruch,
**dadurch gekennzeichnet, dass**
die Wellenbalgeinrichtung (20) einen Stützrahmen (23) aufweist und sich die Kabelführungseinrichtung (50), insbesondere ein mittlerer Teilabschnitt der Kabelführungseinrichtung (50), auf dem Stützrahmen (23) abstützt.

9. Fahrzeug nach dem vorstehenden Anspruch,
**dadurch gekennzeichnet, dass**
der Stützrahmen (23) zumindest ein Gleit- und/oder Rollenelement (230) aufweist, auf dem die Kabelführungseinrichtung (50), insbesondere der mittlere Teilabschnitt der Kabelführungseinrichtung (50), reibungsarm gleitet und/oder rollt.

10. Fahrzeug nach einem der vorstehenden Ansprüche 7 bis 9,
**dadurch gekennzeichnet, dass**
- die Wellenbalgeinrichtung (20) einen zu dem einen Wagenkasten (11) gehörenden Balgabschnitt (20a) und einen zu dem anderen Wagenkasten (12) gehörenden Balgabschnitt (20b) aufweist, und
- der Stützrahmen (23) zwischen den beiden Balgabschnitten (20a, 20b) angeordnet ist.

11. Fahrzeug nach einem der vorstehenden Ansprüche,
**dadurch gekennzeichnet, dass**
- das Fahrzeug ein Eisenbahnzug mit einer Mehrzahl an miteinander verkuppelten Einzelwaggons oder ein Gliederzug ist, bei dem die Wagenkästen (11, 12) Abschnitte des Gliederzuges bilden, und
- die Leitung (30) alle Einzelwaggons oder Abschnitte miteinander verbindet.

## Claims

1. Vehicle, in particular a rail vehicle (10), with at least two coach bodies (11, 12) coupled together, wherein at least one line (30) bridges a gap (13) between the coach bodies (11, 12),
wherein
the line (30) is an outwardly electrically insulated high-voltage line, is flexible and guided in the region of the gap (13) between the coach bodies (11, 12) at least in sections by means of a cable guiding device (50), **characterised in that**
the cable guiding device (50) has a plurality of guiding elements which are mechanically coupled together, which can be pivoted relative to one another in a guiding plane (E), wherein neighbouring guiding elements are connected in each case by means of a pivot support (52), the pivot axis (S) of which is arranged perpendicular to the guiding plane (E) and/or vertical, or at least in an angular range between ±10 degrees to the vertical, and wherein the cable guiding device (50) is flexible in the guiding plane (E) and is less flexible in a plane which is perpendicular thereto than in the guiding plane (E).

2. Vehicle according to claim 1,
**characterised in that**
the cable guiding device (50) is arranged in the region of the gap (13) between the two coach bodies (11, 12) so that the guiding plane (E) of the cable guiding device (50) is arranged parallel to the vehicle support plane (FE) in which the vehicle is standing or moving, in particular horizontal or at least in an angular range between ±10 degrees to the horizontal.

3. Vehicle according to one of the preceding claims,
**characterised in that**
the cable guiding device (50) is torsionally stiff in the plane perpendicular to the guiding plane (E).

4. Vehicle according to one of the preceding claims,
**characterised in that**
the mechanically coupled guiding elements are chain links (51) .

5. Vehicle according to claim 4,
**characterised in that**
the line (30) is routed through the chain links (51) or is at least held by said links.

6. Vehicle according to one of the preceding claims,
**characterised in that**
the line (30) is suitable for carrying traction power with a rated voltage of 3kV or 6kV in the case of DC voltage and/or traction power with a rated voltage of 15kV or 25kV in the case of AC voltage.

7. Vehicle according to one of the preceding claims,
**characterised in that**
- a bellows device (20) is arranged between the coach bodies (11, 12), which provides an outer shield for a walk-through connection between the coach bodies (11, 12),
- the bellows device (20) has a radially outer bellows (22) and a radially inner bellows (21), and
- the cable guiding device (50) is arranged between the inner and the outer bellows (21, 22), in particular in the roof area of the coach bodies (11, 12).

8. Vehicle according to the preceding claim,
**characterised in that**
the bellows device (20) has a support frame (23) and the cable guiding device (50), in particular a centre section of the cable guiding device (50), is supported on the support frame (23) .

9. Vehicle according to the preceding claim,
**characterised in that**
the support frame (23) has at least one sliding and/or rolling element (230) on which the cable guiding device (50), in particular the centre section of the cable guiding device (50), slides and/or rolls with low friction.

10. Vehicle according to one of the preceding claims 7 to 9,
**characterised in that**
- the bellows device (20) has a bellows section (20a) belonging to the one coach body (11) and a bellows section (20b) belonging to the other coach body (12), and
- the support frame (23) is arranged between the two bellows sections (20a, 20b).

11. Vehicle according to one of the preceding claims,
**characterised in that**
- the vehicle is a railroad train with a plurality of individual coaches coupled to one another or is an articulated train in which the coach bodies (11, 12) form sections of the articulated train, and
- the line (30) connects all individual coaches or sections to one another.

## Revendications

1. Véhicule, notamment véhicule (10) ferroviaire, ayant au moins deux caisses (11, 12) attelées les unes aux autres, au moins une ligne (30) jetant un pont sur un intervalle (13) entre les caisses (11, 12),
dans lequel
la ligne (30) est une ligne de haute tension, isolée électriquement vis-à-vis de l'extérieur, est souple et est guidée dans la partie de l'intervalle (13) entre les caisses (11, 12), au moins par tronçon, au moyen d'un dispositif (50) de guidage de câble,
**caractérisé en ce que** le dispositif (50) de guidage de câble a une pluralité d'éléments de guidage couplés entre eux mécaniquement, qui peuvent pivoter les uns par rapport aux autres dans un plan (E) de guidage, des éléments de guidage voisins étant reliés respectivement au moyen d'un palier (52) pivotant, dont l'axe (S) de pivotement est perpendiculaire au plan (E) de guidage et/ou est vertical ou est au moins dans une plage angulaire entre ± 10° par rapport à la verticale et dans lequel le dispositif (50) de guidage de câble est souple dans le plan (E) de guidage et, dans un plan qui lui est perpendiculaire, est moins souple que dans le plan (E) de guidage.

2. Véhicule suivant la revendication 1,
**caractérisé en ce que**
le dispositif (50) de guidage de câble est disposé dans la partie de l'intervalle (13) entre les deux caisses (11, 12) de manière à ce que le plan (E) de guidage du dispositif (50) de guidage de câble soit parallèle au plan (FE) de portée du véhicule, sur lequel le véhicule est à l'arrêt ou roule, notamment horizontal, ou au moins dans une plage angulaire comprise entre ± 10° par rapport à l'horizontal.

3. Véhicule suivant l'une des revendications précédentes,
**caractérisé en ce que**
le dispositif (50) de guidage de câble est résistant à la torsion dans le plan perpendiculaire au plan (E) de guidage.

4. Véhicule suivant l'une des revendications précédentes,
**caractérisé en ce que**
les éléments de guidage couplés mécaniquement sont des maillons (51) de chaîne.

5. Véhicule suivant la revendication 4,
**caractérisé en ce que**
la ligne (30) passe dans les maillons (51) de chaîne ou du moins est maintenue par ceux-ci.

6. Véhicule suivant l'une des revendications précédentes,
**caractérisé en ce que**
la ligne (30) est propre au passage d'un courant de traction d'une tension nominale de 3Kv ou 6Kv en tension continue et/ou d'un courant de traction d'une tension nominale de 15Kv ou 25Kv en tension alternative.

7. Véhicule suivant l'une des revendications précédentes,
**caractérisé en ce que**
- entre les caisses (11, 12) est disposé un dispositif (20) à soufflet ondulé, qui protège vis-à-vis de l'extérieur une liaison pouvant être empruntée entre les caisses (11, 12),
- le dispositif (20) à soufflet ondulé a un soufflet (22) ondulé extérieur radialement et un soufflet (21) ondulé intérieur radialement et
- le dispositif (50) de guidage de câble est disposé entre le soufflet (21) ondulé intérieur et le soufflet (22) ondulé extérieur, notamment dans la partie de toit des caisses (11, 12) .

8. Véhicule suivant la revendication précédente,
**caractérisé en ce que**
le dispositif (20) à soufflet ondulé a un cadre (23) d'appui et le dispositif (50) de guidage de câble, notamment un tronçon partiel médian du dispositif (50) de guidage de câble, s'appuie sur le cadre (23) d'appui.

9. Véhicule suivant la revendication précédente,
**caractérisé en ce que**
le cadre (23) d'appui a au moins un élément (230) glissant et/ou roulant, sur lequel le dispositif (50) de guidage de câble, notamment le tronçon partiel médian du dispositif (50) de guidage de câble, glisse et/ou roule avec peu de frottement.

10. Véhicule suivant l'une des revendications 7 à 9 précédentes,
**caractérisé en ce que**
- le dispositif (20) à soufflet ondulé a une partie (20a) de soufflet appartenant à l'une des caisses (11) et une partie (20b) de soufflet appartenant à l'autre caisse (12) et
- le cadre (23) d'appui est disposé entre les deux parties (20a, 20b) de soufflet.

11. Véhicule suivant l'une des revendications précédentes,
**caractérisé en ce que**
- le véhicule est un train de chemin de fer ayant une pluralité de voitures isolées attelées les unes aux autres ou un train articulé, dans lequel les caisses (11, 12) forment des parties du train articulé, et
- la ligne (30) relie entre elles toutes les voitures isolées ou toutes les parties.
